Europäisches Patentamt

European Patent Office

Office européen des brevets

(11) Veröffentlichungsnummer: **0 341 625**
**A2**

## EUROPÄISCHE PATENTANMELDUNG

(21) Anmeldenummer: 89108230.7

(22) Anmeldetag: 08.05.89

(51) Int. Cl.4: **H04N 7/08 , H04N 11/08 , H04J 3/00**

(30) Priorität: 11.05.88 DE 3816046

(43) Veröffentlichungstag der Anmeldung:
15.11.89 Patentblatt 89/46

(84) Benannte Vertragsstaaten:
FR GB IT

(71) Anmelder: **Interessengemeinschaft für Rundfunkschutzrechte GmbH Schutzrechtsverwertung & Co. KG.**
**Bahnstrasse 62**
**D-4000 Düsseldorf 1(DE)**

(72) Erfinder: **Zschunke, Willmut, Prof. Dr.-Ing.**
**Langgässerweg 29**
**D-6100 Darmstadt(DE)**

(74) Vertreter: **Gornott, Dietmar, Dipl.-Ing.**
**Zilleweg 29**
**D-6100 Darmstadt 12(DE)**

(54) Verfahren zum Übertragen von digitalen Informationen.

(57) Die Erfindung betrifft ein Verfahren zum Übertragen von digitalen Informationen allein oder gemeinsam mit anderen digitalen oder analogen Signalen im Zeitmultiplex an eine Empfängerschaltung mit einem Demodulator und einem Decoder zur Rückgewinnung decodierter Signale aus den codierten Informationen. Zur Bitratenverdopplung ist vorgesehen, daß die Informationen aus zeitkontinuierlichen spektralbegrenzten Signalen durch Abtastung gewonnen und als zeit- und amplitudendiskrete Informationen in zwei oder mehreren Kanälen enthalten sind, wobei das Zeitsignal des einem Kanals jeweils zu den Zeitpunkten abgetastet wird, bei denen das Zeitsignal des weiteren Kanals eine Nullstelle aufweist oder das Zeitsignal des weiteren Kanals dann abgetastet wird, wenn das Zeitsignal im ersten Kanal Null ist, und daß die Informationen der Kanäle vor der Übertragung addiert werden.

Fig.6

# Verfahren zum Übertragen von digitalen Informationen

Der Erfindung betrifft ein Verfahren zum Übertragen von ersten digitalen Informationen allein oder gemeinsam mit zweiten digitalen Informationen oder analogen Signalen im Zeitmultiplex an eine Empfängerschaltung mit einem Demodulator und einem Decoder zur Gewinnung decodierter Signale aus den codierten ersten und zweiten Informationen.

Aus der DE-PS 37 18 679 ist ein Verfahren zum Übertragen von digitalen Tondatensignalen eines ersten Datenpaketes gemeinsam mit analogen Luminanz- und Chrominanzsignalen im Zeitmultiplex bekannt, bei welchem die Frequenzbandbreite des Datenpaketes geringer als die Bandbreite des Luminanz Chrominanzsignals ist und zur Übertragung zusätzlicher Informationen zusätzlich zu den Ton- und Datensignalen des ersten Datenpaketes weitere Ton- und oder Datensignale eines zweiten Datenpaketes im Frequenzmultiplexverfahren übertragen werden, deren Frequenzbandbreite annähernd so groß ist wie die Differenz zwischen der Frequenzbandbreite des ersten Datenpaketes und der des Luminanz Chrominanzsignals, so daß beide Datenpakete ohne Erhöhung der Gesamtbandbreite des Übertragungskanals übertragen werden können.

Mit diesem bekannten Verfahren wird eine Bitratenverdopplung im Ton- und Datenkanals, z.B. bei dem konventionellen D2 MAC-Verfahren möglich, ohne daß übliche D2 MAC-Empfänger beeinträchtigt werden. Zwischen den Ausbaustufen der Bitratenverdopplung besteht Kompatibilität, so daß auch dann, wenn das zweite Datenpaket mitgesendet wird. ein Empfänger, der nur für den Empfang und die Decodierung des ersten Ton/Datenpaketes ausgerüstet ist, diese Signale unverfälscht empfangen und auswerten kann. Die beiden Datenpakete können zwei unabhängigen Kanälen, einem Haupt- und einem Zusatzkanal zugeordnet werden, wobei für die nachfolgenden Betrachtungen gelten soll, daß der konventionelle Kanal als Hauptkanal (HK) und der dem zweiten Datenpaket zugeordnete Kanal mit Zusatzkanal (ZK) bezeichnet sind.

Bei dem bekannten Verfahren werden der Zusatzkanal mittels Modulation und Filterung frequenzmäßig oberhalb des Hauptkanals angeordnet und das Gesamtsignal über Satellit oder Kabel übertragen und empfangsseitig durch Filterung in zwei Datensignale aufgetrennt. Diese Methode setzt voraus, daß herkömmliche D2 MAC-Empfänger mit einem Tiefpass nachgerüstet werden müssen, der den Zusatzkanal unterdrückt, um keine Signalbeeinträchtigungen durch diesen zu erhalten.

Ausgehend von dem Stand der Technik liegt der Erfindung die Aufgabe zugrunde, ein Verfahren und eine Schaltungsanordnung zur Durchführung des Verfahrens eingangs beschriebener Art derart zu verbessern, daß abwärtkompatibel der Empfang von Zusatzinformationen mit vorhandenen MAC-Empfängern möglich ist, ohne darin besondere Schaltungsmaßnahmen für den Empfang von digitalen Signalen mit Zusatzinformationen vorsehen zu müssen. Weiterhin soll das Empfangssignal nur durch ein einziges Filter in der Empfängerschaltung bandbegrenzt sein, um z.B. auch bei zukünftigen HD-MAC-Übertragungen eine höhere Auflösung zu ermöglichen. Ferner liegt der Erfindung die Aufgabe zugrunde, das Verfahren so auszubilden, daß generell bei Signalübertragungen mit vergleichbarer Signalstruktur, wie der Digitalanteil in MAC-Signalen (D2, D, B-MAC), die Übertragung von Zusatzinformationen durch Bitratenverdopplung bei gleicher Kanalbreite ermöglicht wird: insbesondere sollen digitalcodierte Daten, die gemeinsam übertragen werden, sich gegenseitig nicht stören und rauschreduziert sein.

Gelöst wird die Aufgabe durch das im Kennzeichen des Anspruchs 1 angegebene Verfahren, wonach die digitalen Informationen in zwei oder mehreren Kanälen enthalten sind, wobei die Grundvoraussetzung erfüllt sein muß, daß nur zu den Zeitpunkten das eine Signal abgetastet wird, wenn das andere Signal eine Nullstelle aufweist und damit keine gegenseitige Beeinträchtigung der Signale gegeben ist, die nach der Addition als Summensignal übertragen werden. Das Verfahren ist generell auf Signalübertragungsverfahren anwendbar, wenn Bitratenverdopplung oder ganzzahlige Vervielfachungen vorgenommen werden. In diesem Fall muß das Zeitsignal (Hauptkanal) jeweils zu den Zeitpunkten abgetastet werden, bei denen das Zeitsignal des weiteren Kanals eine Nullstelle aufweist. Die Signale können z.B. auch über eine Übertragungsstufe mit Frequenzmodulation an eine Empfängerschaltung oder direkt übertragen werden.

Bezogen auf D2 MAC-Signale bedeutet dies, daß bei einer Verdopplung der Bitrate dennoch eine Abwärtskompatibilität mit bestehenden Empfängern besteht, so daß diese die im Signal empfangenen und die dem Hauptkanal zugeordneten Informationen decodieren können, ohne daß hierfür ein Tiefpaßfilter vorgesehen sein muß oder Signalstörungen durch den Zusatzkanal entstehen, wodurch Umrüst- und weitere Kosten für das Filter gegenüber dem eingangs beschriebenen Stand der Technik eingespart werden. Der Empfänger wird deshalb nur noch durch das Videofilter für den MAC-Teil (gegenwärtig ca. 8,4 MHz) bandbegrenzt. Bei zukünftigen HD-MAC-Übertragungen wird eine höhere Auflösung angestrebt, die zu erreichen ist, indem die hierfür gegebene Bandbegrenzung der Videofilter auf eine Bandbreite von 10,125 MHz an der Nyquist-Flanke erhöht wird, was schon jetzt bei D2 MAC-Empfängern beachtet wird. Das Verfahren arbeitet ebenso ohne Modulation der Signale beider Kanäle.

Das Verfahren ist, wie bereits kurz beschrieben, jedoch nicht nur auf MAC-codierte Signale in Verbindung mit digitalen Ton- und Datensignalen anwendbar. Es ist generell einsetzbar für die Übertragung von digitalen Signalen, wobei die digitalen Informationen entsprechend dem Verfahren Kanälen zugeordnet sind und die Signale nach dem erfindungsgemäßen Verfahren abgetastet und übertragen und aufbereitet werden müssen.

Vorteilhafte Weiterbildungen des Verfahrens sind unter Angabe von weiteren Verfahrensschritten in den Unteransprüchen 2 bis 13 angegeben, wobei das Verfahren und die einzelnen Verfahrensschritte besonders vorteilhaft auf ein Datensignal anwendbar sind, das die Struktur eines Zeitmultiplexsignals wie das nach dem D2 MAC-System aufweist, wobei das Signal in dem Zusatzkanal abweichende Codierungen vom Hauptkanal aufweisen kann.

Die Erzeugung der digitalen Signale in den beiden Kanälen ist dabei auf unterschiedliche Art und Weise möglich, wie aus den Ansprüchen 7, 8, 9 und 10 explizit zu entnehmen ist. Ebenso sind verschiedene Verfahren zur Trennung der digitalen Signale beider Kanäle im Empfänger möglich, um diese danach zu decodieren, wie explizit in den Ansprüchen 11 und 12 angegeben ist.

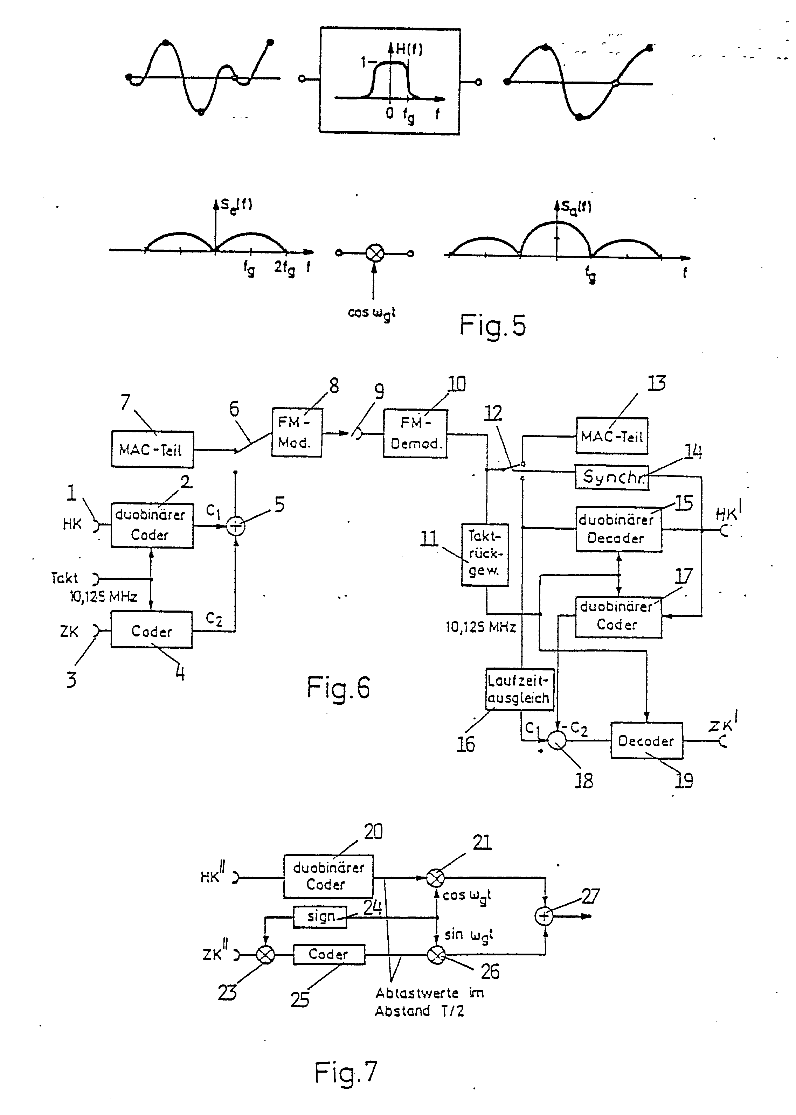

Ein wesentlich besseres Rauschverhalten ist im Empfänger erzielbar, wenn das Verfahren nach Anspruch 12 eingesetzt wird. Hierauf wird später unter Verweis auf Fig. 5 näher eingegangen.

Bei der Anwendung der erfindungsgemäßen Verfahrensschritte wird die Störanfälligkeit bei der Übertragung auf ein Minimum reduziert. Ebenso sind spektrale Anteile, bedingt durch die Abtastung und Filterstörungen, als Impulsantwort des Systems eliminiert. Bei der Abtastung nach dem Verfahren muß jedoch sichergestellt sein, daß immer nur dann das Signal eines Kanals abgetastet wird, wenn eine Nullstelle des anderen erreicht ist, nur so kann es zu keinen gegenseitigen Beeinträchtigungen infolge der Abtastung kommen.

Schaltungsanordnungen, die zweckmäßigerweise zur Durchführung des Verfahrens eingesetzt werden können, sind in den Ansprüchen 14 bis 18 angegeben. Weiterhin sind bevorzugte Verwendungen der Schaltungsanordnung in Systemen in den Ansprüchen 19 bis 21 angegeben.

Die Erfindung wird nachfolgend anhand der in den Zeichnungen dargestellten Fig. näher erläutert.

In den Zeichnungen zeigen:

Fig. 1 ein duobinäres Signal,

Fig. 2 die Zuordnung und Abtastung eines Signalzusatzkanals,

Fig. 3 eine schematische Schaltungsanordnung zur Erzeugung des Signals im Zusatzkanal,

Fig. 4 eine schematische Darstellung einer Schaltungsanordnung zur Erzeugung zusätzlicher Nullstellen im Signal des Hauptkanals,

Fig. 5 eine schematische Darstellung einer Signalrückgewinnungsanordnung mit den Signalverläufen,

Fig. 6 eine Schaltungsanordnung zur Realisierung einer Sender- und Empfängerschaltung im Blockschaltbild und

Fig. 7 eine Schaltungsanordnung zur Erzeugung des zu übertragenden Signals, abgeleitet aus den zeitkontinuierlichen Signalen eines Haupt- und Zusatzkanals.

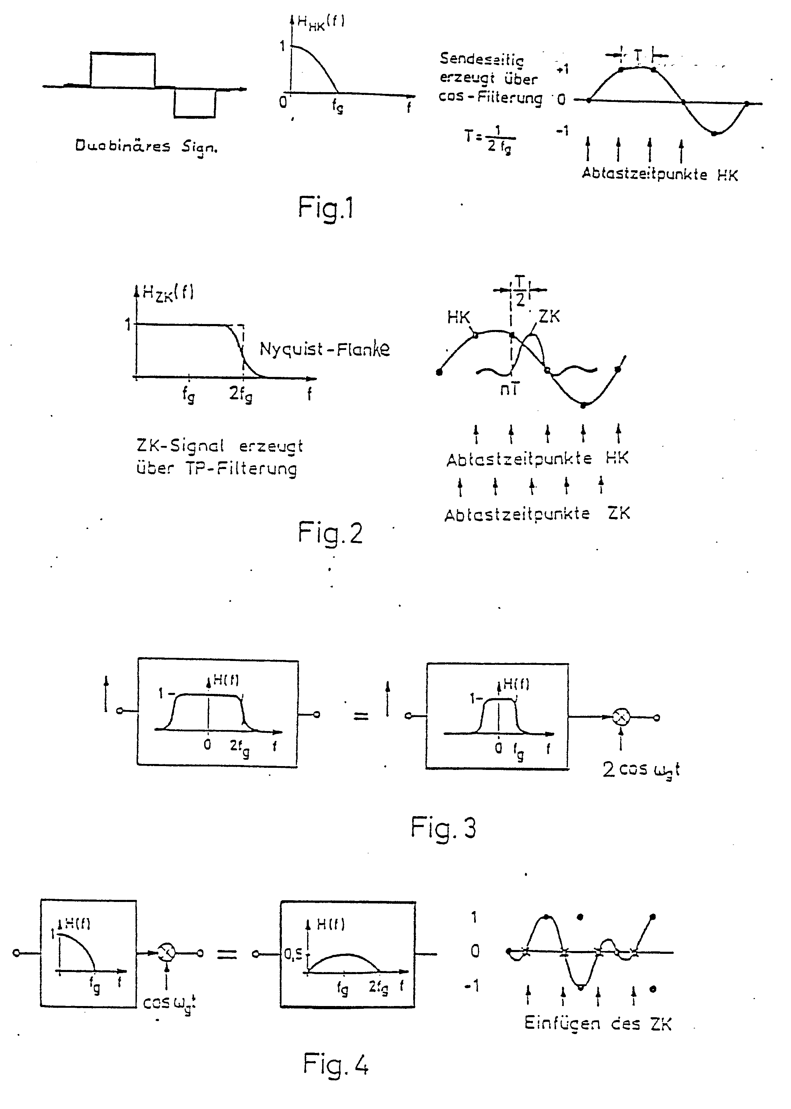

In Fig. 1 ist beispielhaft ein duobinäres Signal dargestellt, wie es beim D2 MAC-Verfahren anliegt, das durch senderseitige Formung mittels eines Kosinusfilters mit der mittels Kurvendiagramm aufgezeigten charakteristischen Filterkurve erzeugt wird - rechts dargestellter Signalverlauf -. Markiert sind die Abtastzeitpunkte, die entsprechend der Bitrate von 10,125 Mbit/s im Abstand $T = 1/10,125$ µs liegen.

Die hierfür anzuwendenden digitalen Signalverarbeitungstechniken sind hinlänglich aus der Abtasttechnik bekannt, ebenso das anzuwendende Abtasttheorem, das zum Verständnis der Erfindung vorausgesetzt wird. Beispielhaft wird diesbezüglich auf die Fachbücher: H.W. Schüßler, Netzwerke, Signale, Systeme, Band II "Theorie kontinuierlicher und zeitdiskreter Systeme", 1984, und "Nachrichtentechnik Übertragung, Vermittlung und Verarbeitung" von Eberhard Herter und Wolfgang Lörcher, 1987, 4. neubearbeitete Auflage, Seite 176 ff., hingewiesen. Aus der letztgenannten Literatur (S. 182) sind auch die Anforderungen an einen Tiefpass bekannt, der erfindungsgemäß für die Erzeugung der Nullstellen einzusetzen ist.

Das in Fig. 1 dargestellte und aus dem duobinären Signal erzeugte zeit- und amplitudendiskrete Signal wird dann nicht durch ein additives Zusatzsignal gestört, wenn das Zusatzsignal gerade zu den Abtastzeitpunkten nT Nullstellen hat. Die Abtastpunkte sind aus dem rechten Kurvendiagramm ersichtlich. Diese Anforderung wird nach dem erfindungsgemäßen Verfahren gelöst, indem das Signal im Zusatzkanal immer zum Abtastzeitpunkt des Signals des Hauptkanals nT Nullstellen hat.

In Fig. 2 ist der charakteristische Kurvenverlauf eines Tiefpassfilters mit der Grenzfrequenz $2 f_g = 10,125$ MHz dargestellt, mit welchem sich ein entsprechendes Signal als Impulsantwort des Tiefpasses erzielen läßt. Die Flanke des Tiefpasses sollte dabei, um Überschwingen zu reduzieren, einen punktsymmetrischen Verlauf haben (Nyquist-Flanke), wie im Anspruch 7 angegeben. Der punktsymmetrische Verlauf ist nicht zwingend notwendig, trägt aber zur Verbesserung der Übertragungseigenschaften des Systems durch die Vermeidung der Überschwingungen bei. Wie weiterhin aus Fig. 2 zu erkennen ist, wird durch das Signal im Zusatzkanal das Signal im Hauptkanal in den Abtastzeitpunkten nicht beeinflußt. Der Hauptkanal kann, demnach, vorausgesetzt, es handelt sich um den Einsatz in einem D2 MAC-System, mit einem üblichen D2 MAC-Empfänger decodiert werden. Die Abtastwerte für das Signal des Zusatzkanals liegen zu dem Zeitpunkt $nT + T'2$ vor. Sie werden zwar durch das Signal des Hauptkanals beeinflußt. Dies führt aber zu keiner Beeinträchtigung bei der Decodierung, da das Signal des Hauptkanals ohne Störungen decodiert werden kann und damit grundsätzlich bekannt ist, so daß auch das Signal des Zusatzkanals unbeeinflußt decodierbar ist. Die Wahl der Abtastfrequenz ist vom gewählten System abhängig. Bei D2 MAC beträgt diese 10,125 MHz, mit welcher der Kompressionsspeicher zur Erzeugung des aus den Komponenten bestehenden D2 MAC-Signalgemisches ausgelesen wird.

In Fig. 3 ist ein anderer Weg der Erzeugung eines digitalcodierten Signals im Zusatzkanal dargestellt, wobei das verwendete Filter mit dem in Fig. 2 charakteristisch dargestellten Kurvenverlauf nochmals im linken Block dargestellt ist. Dieses ist jedoch nach der rechten Darstellung durch eine andere Filteranordnung ersetzt. Das Signal des Zusatzkanals läßt sich nach dieser Filteranordnung auch durch Multiplikation (Modulation) mit einem cos-Träger ($2 \cos\omega_g t$) bei vorgenommener oder nicht vorgenommener Amplitudenanpassung und einer Filterung mit einem Tiefpass mit der halben Grenzfrequenz realisieren. Der entsprechende Kurvenverlauf des eingesetzten Filters und die angeschaltete Multiplikationsschaltung sind rechts neben dem Block hinter dem Gleichheitszeichen dargestellt. Als Endergebnis wird bei Anliegen eines duobinären Signals am Eingang ein zeit- und amplitudendiskretes Signal erzeugt, das durch die Abtastwerte verkörpert ist, wie sie z.B. aus Fig. 2 zu entnehmen sind. Durch die Nullstellen der Kosinus-Funktion werden dabei die gewünschten Nullstellen bei den Abtastwerten des Kanals erzeugt. Diese Realisierungsvariante hat praktische Vorteile, weil die Nullstellen durch die Multiplikation leichter erzwungen werden können. Beide in den Fig. 2 und 3 beschriebenen Schaltungsanordnungen sind zwar nicht identisch, sie zeigen aber beide die gleiche Impulsantwort und haben dasselbe Zeitverhalten in bezug auf die anliegenden Signale, wonach im Abstand T impulse übertragen werden. Die Umpolung der Abtastwerte durch die Multiplikation bzw. Modulation mit dem cos-Träger bei jedem zweiten Impuls läßt sich durch eine einfache eingangsseitige Umpolung der Datenimpulse rückgängig machen. Diesen Invertierung wird sinnvollerweise dabei in der digitalen Ebene durchgeführt.

Mit dem anhand der Fig. 3 beschriebenen Verfahren lassen sich grundsätzlich auch im Signal des Hauptkanals zusätzliche Nullstellen erzeugen bzw. erzwingen. In Fig. 4 ist eine hierfür ebenfalls geeignete weitere Filteranordnung schematisch dargestellt. Das von einem Filter mit einer Kosinus-Funktion, wie aus dem linken Block ersichtlich, abgegriffene Ausgangssignal des Hauptkanals wird dabei mit einem cos-Träger, in der Ausführung ohne Amplitudenanpassung, multipliziert, wodurch an den Abtastpunkten des Signals des Zusatzkanals Nullstellen erzwungen werden, wie sie aus dem rechten Kurvenverlauf unter Fig. 4 ersichtlich sind. Es handelt sich dabei praktisch um eine Zweiseitenbandamplitudenmodulation, bei der die Umpolung durch den cos-Träger bei jedem zweiten Abtastwert bei einer duobinären Codierung nicht schadet, da die Werte $+1$ und $-1$ haben und von gleicher Bedeutung sind. Es ist deshalb zu erkennen, daß die Abtastwerte des Hauptkanals und damit die Kompatibilität erhalten bleiben, sich aber Nullstellen ergeben, an denen die Abtastwerte des Zusatzkanals völlig unbeeinflußt ausgewertet werden können.

Für diesen Fall können z.B. eine aufwendige Rückcodierung des Hauptkanalsignals auf der Empfangsseite und die Subtraktion des erneut codierten Signals des Hauptkanals von dem demodulierten Summensignal zur Rückgewinnung des Signals im Zusatzkanal entfallen, wie nachfolgend beschrieben wird.

Bei der Übertragungsart nach Fig. 2 ist das Signal des Hauptkanals ebenso wie die Signale des Haupt- (HK) und Zusatzkanals (ZK) nach Fig. 4 unbeeinflußt decodierbar. Zieht man das recodierte Signal vom Gesamtsignal ab (vgl. Fig. 6), verbleibt prinzipiell ein Signal mit Nullstellen zwischen jeweils zwei Abtastwerten, die eben dort liegen, wo das Signal des anderen Kanals abgefragt wurde, wie aus Fig. 5 ersichtlich. Schickt man dieses Signal über einen Tiefpaß (mit Nyquistflanke) der Grenzfrequenz $f_g$, so ergibt sich eine beträchtliche Rauschbefreiung, da man nun ein Signal mit Rauschen in der Bandbreite $f_g$ und nicht, wie zuvor, in der Bandbreite $2f_g$ abtastet und decodiert. Bei Weißem Rauschen ist ein Gewinn von 3 dB zu erzielen, bei der dreiecksförmigen Rauschspannung bei FM noch mehr, da der frequenzmäßig höher liegende Signalanteil abgeschnitten wird. Nach Fig. 5 hat das Eingangssignal eine Bandbreite von $2f_g$. Es kann demnach durch seine Abtastwerte im Abstand $1/4f_g$ dargestellt werden. Da aber jeder 2. Abtastwert 0 ist und nicht bei der Decodierung interessiert, genügt ein Tiefpaß der Bandbreite $f_g$, um die von 0 verschiedenen Abtastwerte zu erhalten. Zum gleichen Ergebnis und einer Realisierungsvariante kommt man durch Demodulation mit einem cos-Träger bei $f_g$. Wie der untere Teil von Fig. 5 zeigt, erhält man so zwischen $-f_g$ ...$f_g$ das ursprüngliche Spektrum in richtiger Frequenzlage; eine Tiefpaßfilterung entfernt höhere Frequenzanteile. (Bei der cos-Multiplikation ist eine Umdrehung jedes zweiten Bits zu beachten, falls sendeseitig nicht multipliziert wurde.) Bei Weißem Rauschen liefert diese Demodulation ebenfalls 3 dB Gewinn an Signal-Geräuschverhältnis (das Geräusch addiert sich leistungsmäßig, das Signal spannungsmäßig); bei dreiecksförmigem Rauschen ist sie allerdings schlechter, weil der Rauschanteil von $f_g$...$2f_g$ nach der Demodulation ins Band $0..f_g$ entfällt.

In Fig. 6 sind in Form eines Blockschaltbildes die wesentlichen Komponenten einer Schaltungsanordnung für die Durchführung eines erfindungsgemäßen Verfahrens dargestellt, wie sie für die Bitratenverdopplung der Datenpakete in einem D2 MAC-Signal beispielhaft eingesetzt werden können, um dadurch über einen Zusatzkanal weitere digitale Informationen übertragen zu können, die dann angezeigt, ausgewertet oder weiterverarbeitet werden können. Die codierten Signale des Hauptkanals werden über den Eingang 1 einem duobinären Coder 2 der Senderseite zugeführt. Ebenfalls wird das Signal des Zusatzkanals ZK über den Eingang 3 dem Coder 4 zugeführt. Der duobinäre Coder und auch der Coder im Zusatzkanal weisen Tiefpässe mit Charakteristiken auf, wie sie z.B. aus den Fig. 1 und 2 zu entnehmen sind. Die anliegenden und dem Coder 2 oder 4 zugeführten Signale werden mit einer Taktfrequenz von 10,125 MHz getaktet, wobei die Abtastzeitpunkte des Signals im Coder 4 entsprechend der Darstellung in Fig. 2 um $T/2$ gegenüber denen im Hauptkanal zeitversetzt sind. Die so gewonnenen zeit- und amplitudendiskreten Ausgangssignale liegen an den Ausgängen C1 und C2 der beiden Coder 2, 4 an und werden einem Addierglied 5 zugeführt und in diesem addiert. Dem Addierglied 5 ist eine synchronisierte Zeitmultiplexschaltung 6 nachgeschaltet, über die entsprechend der Zuordnung im Zeitmultiplexsignal entweder die addierten digitalen Signalinformationen oder das MAC-Signal, ein analoges Luminanz/Chrominanzsignal, vom MAC-Teil 7 an den FM-Modulator 8 durchgeschaltet wird. Die Signale werden dabei mit der Zeilenfrequenz des Bildabtasters synchronisiert. Das FM-modulierte Zeitmultiplexsignal wird über die Übertragungsstrecke 9 übertragen und in einer Empfängerschaltung mittels eines FM-Demodulators demoduliert. Die zeitversetzte Steuerung der Abtastung der Signale im Haupt- und Zusatzkanal läßt sich bei der Filterrealisierung in den Codern oder durch Laufzeitanpassung des Taktes und der Daten leicht erreichen.

Empfängerseitig wird nun aus dem demodulierten empfangenen Signal durch eine Taktrückgewinnungsschaltung 11, z.B. eine PLL oder einen Quadraturdemodulator, die Taktfrequenz, mit der das Signal senderseitig abgetastet ist, rückgewonnen. Diese wird benötigt, um eine synchrone Decodierung des Signals und damit Rückgewinnung des zeitkontinuierlichen, amplitudendiskreten Signals an den Ausgängen der Decoder $HK'$ und $ZK'$ der beiden Kanäle zu ermöglichen. Der elektronische Schalter 12, über den zum einen das demodulierte Signal an den MAC-Teil 13 des Empfängers und zum anderen durch Umschaltung an die Decoder angelegt wird, wird gesteuert von Synchronimpulsen, die in einer Synchronisierschaltung 14 aus den decodierten Signalen des Hauptkanals gewonnen werden. Selbstverständlich kann auch eine gesonderte Abtrennung eventuell mitübertragener Synchronimpulse erfolgen, die zu Steuerzwecken dieser Art verwendet werden können. Befindet sich nun der Schalter 12 der Zeitmultiplexschaltung in der unteren Stellung, so wird das FM-demodulierte Signal während dieser Zeit zum einen an den Eingang des duobinären Decoders 15 und zum anderen an die Laufzeitausgleichsschaltung 16 gelegt. In dem duobinären Decoder 15 werden getaktet mit der zurückgewonnenen Abtastfrequenz die zeitdiskreten Signale des Hauptkanals decodiert und als zeitkontinuierliche Informationen über den Ausgang $HK'$ ausgegeben. In dem dargestellten Ausführungsbeispiel wird das Signal aber auch zugleich einem weiteren duobinären Coder 17 zugeführt, der von der gleichen Taktfrequenz getaktet wird, so daß an dessen Ausgang wiederum ein zeitdiskretes Signal des Hauptkanals anliegt. Dieses Signal wird von dem der Laufzeit angepaßten empfangenen demodulierten Summensignal in der Subtrahierschaltung 18 subtrahiert, so daß an dem Ausgang jenes zeit- und amplitudendiskrete Signal anliegt, das dem Spektrum des Signals im Zusatzkanal entspricht. Dieses Signal kann nun von dem Decoder 19 decodiert werden, der ebenfalls von den rückgewonnen Taktfrequenzen gesteuert wird. Am Ausgang des Decoders 19 liegt mithin das zeitkontinuierliche amplitudendiskrete Signal an, das den weiteren Verarbeitungsstufen der Empfängerschaltung zugeführt werden kann. Bei den Daten kann es sich entweder um digitale Tonsignale oder um digitale Datensignale handeln, die nicht duobinär codiert sein müssen.

Jede andere Codierung ist ebenfalls möglich. Nach der Empfängerschaltung wird das decodierte Hauptkanalsignal durch eine neuerliche cos-Filterung wieder in ein dem duobinären Signal entsprechendes Signal umgesetzt und von dem Summensignal nach Fig. 2 subtrahiert. Damit verbleibt nur noch das Signal des Zusatzkanals am Ausgang. An die Stelle der hier beschriebenen Schaltung kann selbstverständlich auch eine Decoderschaltung unter Verwendung einer Filteranordnung gemäß Fig. 3 oder 4 treten.

In Fig. 7 ist ein weiteres Beispiel zur Erzeugung zeitdiskreter Signale eines Haupt- und Zusatzkanals dargestellt, bei welchen das digitale Signal des Hauptkanals einem Duobinärcoder 20 zugeführt wird, dem eine Multiplikationsschaltung bzw. ein Modulator 21 nachgeschaltet ist. Das Signal des Zusatzkanals ZK'' wird über eine Multiplikationsschaltung 23 mit einer anliegenden Vorzeichenbildung (Signumfunktion) von dem Baustein 24 multipliziert und dem Coder 25 zugeführt, wodurch jedes zweite Bit umgepolt wird. Das Ausgangssignal des Coders liegt ebenfalls an einer Multiplikationsschaltung 26 an, in welcher es mit einem Sinusträger $\sin\omega gt$ moduliert wird. Das Ausgangssignal des ersten Coders 20 wird hingegen mit einem Kosinusträger $\cos\omega gt$ moduliert, wie es anhand der Fig. 3 bzw. 4 beschrieben ist. Beide Ausgänge der Multiplikationsschaltungen 21, 26 sind mit den beiden Eingängen einer Addierschaltung 27 verbunden, die der Addierschaltung 5 in Fig. 6 entspricht und in welcher die Signale zu einem Summensignal addiert werden.

Die hier dargestellt Ausführung des Senderteils weist Filter der Grenzfrequenz $f_g$ auf, deren Ausgangssignale mit einem Träger multipliziert werden. Da die Signale des Hauptkanals und die des Zusatzkanals mit Abtastwerten um T/2 versetzt werden, erhält der Zusatzkanal 2 einen Sinusträger, der Hauptkanalzweig hingegen einen Kosinusträger, wie bereits angegeben. Die Schaltungsrealisierung entspricht im Prinzip einer Quadraturamplitudenmodulation, womit zwei voneinander unabhängige Signale übertragbar sind. Aus Gründen der Kompatibilität kann empfangsseitig jedoch der Hauptkanal nicht durch reine Demodulation sondern nur durch Abtastung ausgewertet werden. Diese Forderung beeinflußt die Senderseite in der Weise, daß die Abtastwerte vom Hauptkanal und Zusatzkanal um T/2 versetzt sein müssen. Der Hauptkanal ist durch Abtastung auszuwerten, der Zusatzkanal kann deshalb durch um T/2 versetzte Abtastung gewonnen werden. Er könnte aber auch durch Demodulation mit einem Sinusträger empfängerseitig, was nicht dargestellt ist, decodiert werden. Im letzteren Fall ist die Umpolung jedes zweiten Bits wegzulassen.

Vorteilhaft bei dem Verfahren nach der Erfindung und den ausgeführten Schaltungen sind außer der geringeren Komplexität unter Vermeidung aufwendiger Filterungen, daß, wie bereits erwähnt, auf eine empfangsseitige Tiefpassfilterung der Zusatzkanalinformation verzichtet werden kann, wenn der Empfänger nur den Empfang der Hauptkanalinformation gestattet. Das Verfahren, weist darüber hinaus übertragungstechnische Vorteile auf, weil der Zusatzkanal nicht in den frequenzmäßig höheren Teil des durch dreieckförmiges Rauschen gestörte Teil des FM-Signals gelegt wird. Die Bitraten des Haupt- und Zusatzkanals müssen jedoch zwingend gleich groß sein, weil anders keine definierten Nullstellen entweder im Haupt- oder Zusatzkanal erzeugt werden können, um eine gegenseitige Abtastung störungsfrei durchführen zu können.

## Ansprüche

1. Verfahren zum Übertragen von digitalen Informationen allein oder gemeinsam mit zweiten digitalen oder analogen Signalen im Zeitmultiplex an eine Empfängerschaltung mit Decoder zur Rückgewinnung decodierter Signale aus den codierten Informationen, **dadurch gekennzeichnet,** daß die erstem und zweiten Informationen aus zeitkontinuierlichen spektralbegrenzten Signalen durch Abtastung gewonnen und als zeit- und amplitudendiskrete Informationen in zwei oder mehreren Kanälen enthalten sind, wobei das Zeitsignal des einen Kanals (HK) jeweils zu den Zeitpunkten abgetastet wird, bei denen das Zeitsignal (ZK) des weiteren Kanals eine Nullstelle aufweist oder das Zeitsignal des weiteren Kanals dann abgetastet wird, wenn das Zeitsignal im ersten Kanal (HK) Null ist, und daß die Informationen der Kanäle vor der Übertragung gemischt werden.

2. Verfahren nach Anspruch 1, **dadurch gekennzeichnet,** daß die Informationen in den Kanälen vor der Übertragung addiert oder multipliziert werden.

3. Verfahren nach Anspruch 1 oder 2, **dadurch gekennzeichnet,** daß die Informationen in zwei voneinander unabhängigen Kanälen, einem Haupt- und einem Zusatzkanal, mit jeweils gleichen Bitraten übertragen werden und daß der Abtastintervall T der zeitdiskreten Signale beider Kanäle um T/2 gegeneinander versetzt ist.

4. Verfahren nach Anspruch 3, gekennzeichnet durch die Verwendung zur Bitratenverdoppelung eines Ton- und/oder Datenpaketes in einem Zeitmultiplexsignal, wie D 2-MAC oder D-oder B-MAC-Signal, bestehend aus einem Ton/Datenpaket und einem Luminanz/Chrominanz-Signal, wobei das Ton/Datenpaket eine Bitrate mit einer Bandbreite aufweist, die der halben Frequenzbandbreite des Luminanz/Chrominanz-Signals entspricht oder geringer ist und die Information des Hauptkanals bildet.

5. Verfahren nach Anspruch 4, dadurch gekennzeichnet, daß die Zeitsignale im Haupt- und Zusatzkanal mit einer Taktfrequenz von 10,125 MHz abgetastet werden.

6. Verfahren nach einem der vorhergehenden Ansprüche, dadurch gekennzeichnet, daß die Datensignale des Haupt- und Zusatzkanals gleich codiert oder abweichend codiert sind, wie duobinär oder binär.

7. Verfahren nach Anspruch 6, dadurch gekennzeichnet, daß das Signal des Hauptkanals ein duobinärcodiertes Signal ist und durch Formung mittels eines Kosinusfilters erzeugt wird.

8. Verfahren nach einem der Ansprüche 1 bis 6 in Verbindung mit Anspruch 4, dadurch gekennzeichnet, daß das Signal des Zusatzkanals aus der Impulsantwort eines Tiefpasses mit einer Grenzfrequenz von $2f_g = 10,125$ MHz abgeleitet wird, wobei der Tiefpaß eine Nyquist-Flanke mit punktsymmetrischem Verlauf aufweist.

9. Verfahren nach einem der Ansprüche 1 bis 7, dadurch gekennzeichnet, daß das spektral begrenzte ($\leq f_g$) Zeitsignal im Zusatzkanal mit einem cos-Träger mit der Frequenz $f_g$ (Grenzfrequenz des Abtastsystems) zweiseitenbandamplitudenmoduliert wird ($2 \cos\omega_g t$.

10. Verfahren nach Anspruch 1, dadurch gekennzeichnet, daß das cos-gefilterte Zeitsignal im ersten Kanal (HK) spektral begrenzt ($= f_g$) und mit einem cos-Träger mit der Grenzfrequenz ($f_g$) moduliert wird.

11. Verfahren nach einem der Ansprüche 7 bis 10 zur Rückgewinnung der zeitkontinuierlichen Signale im Haupt- und Zusatzkanal in dem Empfänger, dadurch gekennzeichnet, daß das codierte Signal im Hauptkanal in einem Decoder decodiert wird, und daß das Signal im Zusatzkanal durch Multiplikation (Modulation) mit einem cos-Träger und durch Filterung mit einem Tiefpaß mit der halben Grenzfrequenz zurückgewonnen und in einem Dcoder decodiert wird oder durch Subtraktion des durch erneute Abtastung aus dem Signal des Hauptkanals erzeugten zeitdiskreten Signals von dem Summensignal des empfangenen Zusatzkanalsignals gewonnen und dann decodiert wird.

12. Verfahren nach einem der Ansprüche 7 bis 10 zur Rückgewinnung der zeitkontinuierlichen Signale im Haupt- und Zusatzkanal im Empfänger, dadurch gekennzeichnet, daß die Signale jenes Kanals, die erzwungenerweise Nullstellen aufweisen durch eine Filter mit der Bandbreite $f_g$ spektralbegrenzt oder mit einem cos-Träger bei $f_g$ demoduliert werden.

13. Verfahren nach Anspruch 11 oder 12 mit einem duobinärcodierten Signal im Hauptkanal, dadurch gekennzeichnet, daß das decodierte Signal im Hauptkanal für die Subtraktion vom empfangenen Summensignal durch cos-Filterung in ein duobinärcodiertes Signal erneut umgesetzt wird.

14. Schaltungsanordnung zur Durchführung des Verfahrens nach einem der vorhergehenden Ansprüche, dadurch gekennzeichnet, daß ein erster Coder (2) für das Signal im Hauptkanal (HK) und ein zweiter Coder (4) für die Signale im Zusatzkanal (ZK) vorgesehen sind, deren Ausgänge ($C_1$, $C_2$) mit den Eingängen eines Addiergliedes (5) verbunden sind, dessen Ausgang mit einem FM-Modulator (8) oder mit einer synchronisierten Zeitmultiplexschaltung (6) verbunden ist, über die andere Signale, wie analoge Videosignale, einkoppelbar sind, wobei das Zeitmultiplexsignal FM-moduliert übertragen wird.

15. Schaltungsanordnung zur Rückgewinnung der Kanalsignale aus dem empfangenen Summensignal, nach einem der Ansprüche 1 oder 2 und 11 bis 13, **dadurch gekennzeichnet,** daß eine Taktimpulsrückgewinnungsschaltung (11), wie PLL oder Quadraturdemodulator, vorgesehen ist, mit der der Abtasttakt aus dem demodulierten Empfangssignal zurückgewonnen wird, daß ein erster Decoder (15) zur Rückgewinnung des Zeitsignals des Hauptkanals (HK) und ein zweiter Decoder (17) zur Rückgewinnung des decodierten Signals des zweiten Kanals (ZK) vorgesehen sind, die von dem Abtasttakt um T/2 versetzt gesteuert werden, und daß in dem Signalweg des demodulierten Summensignals im Zusatzkanal ein Laufzeitanpassungsglied (16) zur Laufzeitanpassung an das Signal im ersten Kanal vorgesehen ist, und daß der Ausgang mit dem einen Eingang eines Subtrahiergliedes (18) verbunden ist, an dessen Subtrahiereingang das durch erneute Abtastung des codierten Signals im Hauptkanal zeitdiskrete Signal anliegt, und daß das Ausgangssignal des Subtrahiergliedes (18) vom zweiten Decoder (19) decodiert wird.

16. Schaltungsanordnung nach Anspruch 15 zum Empfang eines duobinärcodierten Signals im Hauptkanal, dadurch gekennzeichnet, daß der Decoder (15) zur Decodierung des zeitdiskreten Signals im Hauptkanal ein duobinär decodierender Decoder ist und der Coder zur Erzeugung des Subtraktionssignals ein duobinärer Coder (17) ist.

17. Schaltungsanordnung nach einem der Ansprüche 14 bis 16 zum Empfang von digitalen Signalen in MAC-codierten Zeitmultiplexsignalen, wie D2-MAC, B-MAC oder C-Mac-Signalen, dadurch gekennzeichnet, daß aus dem decodierten Signal im Haupt- oder Zusatzkanal ein Synchronisiersignal abgeleitet wird, das über eine Synchronisierungsschaltung einen elektronischen Umschalter eines Zeitmultiplexschalters im Empfangskanal steuert, über den jeweils das dem Ton/Datenpaket zugeordnete Luminanz-/Chrominanzsignal im Zeitmultiplex an einen MAC-Decoder und das Ton/Datenpaket an die Decoder durchschaltet wird.

18. Schaltungsanordnung nach Anspruch 14, dadurch gekennzeichnet, daß das abgetastete Signal im Hauptkanal nach dem duobinären Coder (20) in einer Multiplikationsstufe (21) mit einem cos-Träger ($\cos\omega_g t$) und das Signal im Zusatzkanal nach Abtastung in dem Coder (25) mit einem sinus-Träger (sinω_g t) multipliziert bzw. moduliert werden, und daß die so gewonnenen spektral unabhängigen Zeitsignale nach der Addition (27) übertragen werden, und daß empfängerseitig eine Abtastschaltung vorgesehen ist, die im Abtastintervall des Abtastsignals den Decoder des Hauptkanals steuert und den zweiten Decoder für den Zusatzkanal um den halben Abtastintervall versetzt abtastet oder ein Demodulator vorgesehen ist, in welchem durch Demodulation mit einem Sinusträger das Signal des zweiten Kanals zurückgewonnen wird, wobei die Umpolung jedes zweiten Bits wirkungslos geschaltet ist.

19. Schaltungsanordnung nach einem der Ansprüche 14 bis 18, gekennzeichnet durch die Verwendung in einer Kopfstation einer Übertragungsstrecke zur Eingabe decodierter oder undecodierter Ton,Datensignale der beiden Pakete in gesonderte schmalbandige Kanäle gemeinsam oder unabhängig vom Luminanz,Chrominanzsignal.

20. Schaltungsanordnung nach einem der Ansprüche 14 bis 18, gekennzeichnet durch die Verwendung in einer Satellitenempfangsanlage zur Einspeisung der Signale des Zusatzkanals in gesonderte Kabelkanäle mit reduzierter Bandbreite (7 bis 8 MHz bzw. 12 MHz).

21. Schaltungsanordnung nach einem der Ansprüche 14 bis 18, gekennzeichnet durch die Verwendung in einem Fernsehempfangsgerät.

EP 0 341 625 A2

Duobinäres Sign.

Sendeseitig erzeugt über cos-Filterung

$T = \frac{1}{2f_g}$

Abtastzeitpunkte HK

Fig.1

Nyquist-Flanke

ZK-Signal erzeugt über TP-Filterung

HK  ZK

$nT$

Abtastzeitpunkte HK

Abtastzeitpunkte ZK

Fig.2

$2 \cos \omega_g t$

Fig. 3

$\cos \omega_g t$

Einfügen des ZK

Fig. 4

Fig.5

Fig.6

Fig.7